# EUROPEAN PATENT APPLICATION

(11) **EP 3 958 149 A1**
(43) Date of publication of application: **23.02.2022**
(21) Application number: 20831690.1
(22) Date of filing: 20.04.2020
(51) Int. Cl.: G06F 17/15

(54) **DATA PROCESSING METHOD AND DEVICE, STORAGE MEDIUM AND ELECTRONIC DEVICE**

(30) Priority: 27.06.2019 CN 201910569119
(71) Applicant: ZTE Corporation, shenzhen Guangdong 518057 (CN)
(72) Inventor: WANG, Hong, Shenzhen, Guangdong 518057 (CN); XU, Ke, Shenzhen, Guangdong 518057 (CN); LU, Guoning, Shenzhen, Guangdong 518057 (CN); ZHEN, Degen, Shenzhen, Guangdong 518057 (CN); KONG, Dehui, Shenzhen, Guangdong 518057 (CN); ZHANG, Xiao, Shenzhen, Guangdong 518057 (CN)
(74) Representative: Murgitroyd & Company
(86) International application number: PCT/CN2020/085660
(87) International publication number: WO 2020/259031

(57) **Abstract**

A data processing method and device, a storage medium and an electronic device are disclosed. The method includes: reading M*N feature map data of all input channels and weights of a preset number of output channels, here a value of M*N and a value of the preset number are respectively determined by preset Y*Y weights; inputting the read feature map data and the weights of the preset number of output channels into a multiply-add array of the preset number of output channels for a convolution calculation; here a mode of the convolution calculation includes: not performing the convolution calculation in a case that the feature map data or the weights of the output channels are zero, and selecting one from same values for the convolution calculation in a case that there are a plurality of feature map data with the same values; and outputting a result of the convolution calculation.

## Description

The present application claims priority of Chinese patent application No. 201910569119.3 filed with the Chinese Patent Office on June 27, 2019 which is incorporated herein by reference in its entirety.

### TECHNICAL FIELD

The present application relates to the computer field, for example, to a data processing method and device, a storage medium and an electronic device.

### BACKGROUND

Artificial intelligence (AI) is flourishing, but a basic architecture of a central processing unit (CPU), a graphics processing unit (GPU), a field programmable gate array (FPGA) and other chips have existed before the AI breakthrough. These chips are not specially designed for AI, so the chips are unable to perfectly undertake the task of realizing AI. AI algorithms are still undergoing constant changes. It is necessary to find a structure that can adapt to all algorithms and make AI chips an energy-efficient general-purpose deep learning engine.

A deep learning algorithm is built on a multi-layer large-scale neural network. The neural network is essentially a large-scale function that includes matrix product and convolution operations. Usually, it is necessary to first define a cost function that includes a variance of a regression problem and a cross entropy during classification, then pass data into the network in batches, and derive a value of the cost function according to parameters, thereby updating the entire network model. This usually means at least a few million times of multiplication processing, which is a huge amount of calculation. Generally speaking, millions of A*B+C calculations are involved, which is a huge drain on computing power. Therefore, the deep learning algorithm mainly needs to be accelerated in a convolution part, and a calculation power may be improved through the accumulation of the convolution part. Compared with most algorithms in the past that has a high computational complexity, a relationship between the computational complexity and storage complexity of deep learning is inverted, and the performance bottleneck and power consumption bottleneck brought by a storage part are far greater than that of a calculation part. Thus simply designing a convolution accelerator does not improve the calculation performance of the deep learning.

### SUMMARY

Embodiments of the present disclosure provide a data processing method and device, a storage medium, and an electronic device to at least solve problems of how to efficiently accelerate a convolution part in AI in a related art.

An embodiment of the present disclosure provides a data processing method, including steps of:
reading M*N feature map data of all input channels and weights of a preset number of output channels, herein a value of M*N and a value of the preset number are respectively determined by preset Y*Y weights;
inputting read feature map data and the weights of the preset number of output channels into a multiply-add array of the preset number of output channels for a convolution calculation; herein a mode of the convolution calculation includes:
   not performing the convolution calculation in a case that the feature map data or
   the weights of the output channels are zero, and
   selecting one from a plurality of same values to perform the convolution calculation in a case that there is a plurality of feature map data with the same values;
outputting a result of the convolution calculation.

Another embodiment of the present disclosure provides a data processing device, including:
a reading module, configured to configured to read M*N feature map data of all input channels and weights of a preset number of output channels, herein a value of M*N and a value of the preset number are respectively determined by preset Y*Y weights;
a convolution module, configured to input read feature map data and the weights of the preset number of output channels into a multiply-add array of the preset number of output channels for a convolution calculation; herein a mode of the convolution calculation includes:
   not performing the convolution calculation in a case that the feature map data or
   the weights of the output channels are zero, and
   selecting one from a plurality of same values to perform the convolution calculation in a case that there are a plurality of feature map data with the same values; and
an output module, configured to output a result of the convolution calculation.

Still another embodiment of the present disclosure provides a storage medium storing a computer program configured to perform any one of the method embodiments of the present disclosure when the computer program is running.

Yet another embodiment of the present disclosure further provides an electronic device, including a memory and a processor. The memory stores a computer program, and the processor is configured to run the computer program to perform any one of the method embodiments of the present disclosure.

### BRIEF DESCRIPTION OF THE DRAWINGS

FIG. 1 is a block diagram of a hardware structure of a terminal performing a data processing method according to an embodiment of the present disclosure.
FIG. 2 is a flowchart of a data processing method according to an embodiment of the present disclosure.
FIG. 3 is a schematic diagram of an overall design according to an embodiment of the present disclosure.
FIG. 4 is a schematic diagram of an AI processing architecture of an embodiment of the present disclosure.
FIG. 5 is a schematic diagram of a data flow of step S4020 according to an alternative embodiment of the present disclosure.
FIG. 6 is a schematic diagram of a data flow of step S4030 according to an alternative embodiment of the present disclosure.
FIG. 7 is a schematic diagram of a data flow of step S4050 according to an alternative embodiment of the present disclosure.
FIG. 8 is a schematic diagram of an acceleration part of a convolutional neural network (CNN) according to an alternative embodiment of the present disclosure.
FIG. 9 is a schematic diagram of reducing power consumption according to an embodiment of the present disclosure.
FIG. 10 is another schematic diagram of reducing power consumption according to an embodiment of the present disclosure.
FIG. 11 is a schematic structural diagram of a data processing device according to an embodiment of the present disclosure.

### DETAILED DESCRIPTION

The present disclosure will be described with reference to drawings and embodiments.

Terms such as "first", "second", etc. herein are meat to distinguish similar objects, rather than to describe a specific order or sequence.

### Example 1

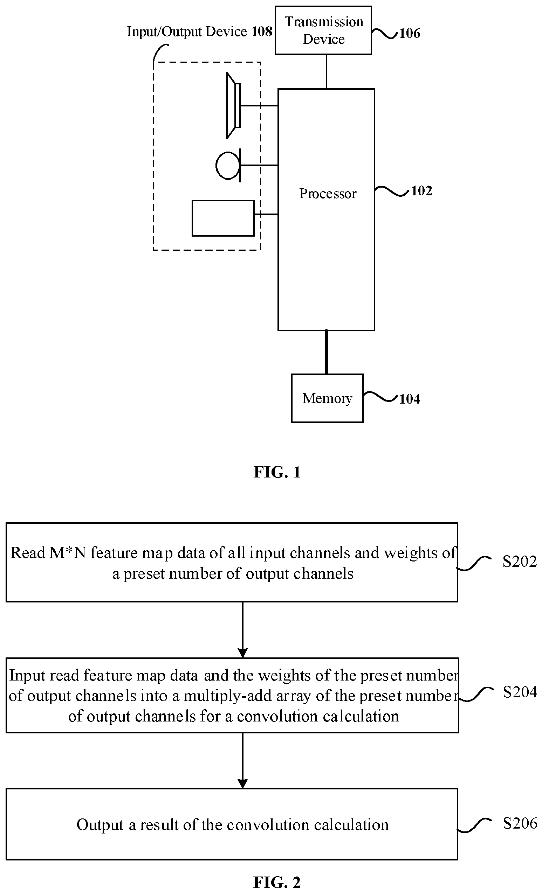

An embodiment of the present disclosure is a method example that may be performed in a computing device such as a terminal, a computer terminal, or the like. Herein, running on the terminal is taken as an example. FIG. 1 is a block diagram of a hardware structure of a terminal performing a data processing method according to an embodiment of the present disclosure. As shown in FIG. 1, a terminal 10 may include one or more (only one is shown in FIG. 1) processors 102 (the processor 102 may include, but is not limited to, a microcontroller unit (MCU) or a field programmable gate array (FPGA)) and a memory 104 for storing data. Alternatively, the terminal may further include a transmission device 106 and an input/output (I/O) device 108 for communication functions. FIG. 1 shows the structure for illustration rather than to define the structure of the terminal. For example, the terminal 10 may further include more or less components than those shown in FIG. 1, or have a different configuration from that shown in FIG. 1.

The memory 104 may be configured to store a computer program such as a software program and a module of an application, for example, a computer program for the data processing method according to embodiments of the present disclosure. Through running the computer program stored in the memory 104, the processor 102 performs multiple functions and data processing to implement the method. The memory 104 may include a cache random access memory, and may further include a non-volatile memory such as one or more magnetic storage device, flash memories, or other non-volatile solid-state memories. In some examples, the memory 104 may include a memory remotely disposed relative to the processor 102. Remote memories may be connected to the terminal 10 through a network. Examples of the network may include but not limited to the Internet, an intranet, a local area network, a mobile communication network and a combination thereof.

The transmission device 106 is configured to receive or transmit data through one network. A particular example of the network may include a wireless network provided by a communication provider of the terminal 10. In one example, the transmission device 106 includes one network interface controller (NIC) that may be connected to other network devices through a base station to communicate with the Internet. In one example, the transmission device 106 may be a radio frequency (RF) module configured to wirelessly communicate with the Internet.

In this embodiment, a data processing method running on the terminal is provided. FIG. 2 is a flowchart of a data processing method according to an embodiment of the present disclosure. As shown in FIG. 2, the process includes following steps.

In step S202, M*N feature map data of all input channels and weights of a preset number of output channels are read, herein a value of M*N and a value of the preset number are respectively determined by preset Y*Y weights; M, N, and Y are all positive integers.

If the preset Y*Y weights are 3*3/1*1, M*N=(15+2)*(9+2). If the weights are 5*5, M*N=(15+4)*(25+4). If the weights are 7*7, M*N=(15+6)*(49+6). If the weights are 11*11, M*N=(15+10)*(121+10).

If the preset Y*Y weights are 3*3/1*1, oc_num (the preset number) =16. If the weights are 5*5, oc_num=5. If the weights are 7*7, oc_num=3. If the weights are 11*11, oc_num=1.

In step S204, read feature map data and the weights of the output channels are input into a multiply-add array of the preset number of output channels for a convolution calculation. Herein, a mode of the convolution calculation includes: when the feature map data or the weights of the output channels are zero, no convolution calculation is performed; when there are a plurality of feature map data with same values, one of the same values is selected for the convolution calculation.

In step S206, a result of the convolution calculation is output.

Through the steps S202 to S206, after reading the M*N feature map data of all the input channels and the weights of the preset number of output channels, the convolution mode is as follows: when the feature map data or the weights of the output channels are zero, no convolution calculation is performed; when there are a plurality of feature map data with the same values, one of the same values is selected for the convolution calculation. That is to say, since there are zero values in the feature map data and weights, the multiplication result of these values must be 0, then a multiplication calculation and an accumulation calculation this time may be omitted to reduce power consumption. In a case that many values in the feature map data are the same, there is no need to perform the multiplication calculation for following same values of the feature map data, but to directly use a result of a previous last calculation, which also reduces power consumption. In this way, the problem of how to efficiently accelerate a convolution part in AI is solved, so as to achieve an effect of efficiently accelerating the convolution part and saving power consumption.

In an alternative implementation of this embodiment, reading the M*N feature map data of all the input channels and the weights of the preset number of output channels involved in step S202 in this embodiment may include followings steps.

In steps S202-110, the M*N feature map data of all the input channels are read and saved in a memory.

In steps S202-120, the weights of the preset number of output channels are read and saved in the memory.

In an application scenario, the step S202 may be: read the M*N feature map data of all the input channels and store them in an internal static random access memory (SRAM); read the weights of oc_num output channels and store them in the internal SRAM

In an alternative implementation of this embodiment, the read feature map data and the weights of the output channels, involved in step S204 of the present disclosure, are inputted into the multiply-add array of the preset number of output channels for the convolution calculation, which may be achieved by following steps.

In step S10, M*1 feature map data of a first input channel is input into a calculation array of the preset number of output channels, and a first group of Z*1 multiply-add units are used to perform a multiply-add calculation so as to obtain Z calculation results, herein Z is determined by the preset Y*Y weights.

In step S20, in following cycles, M*1 feature map data of a next line is sequentially input into the calculation array of the preset number of output channels, until after a Y-th cycle once the reading operation is performed, all the feature maps data is replaced as a whole, herein the reading operation is: reading the M*N feature map data of all the input channels and the weights of the preset number of output channels.

Herein, this step S20 includes steps of:
Step S210: in a next cycle, inputting M*1 feature map data of a next line of the first input channel into the calculation array of the preset number of output channels, and using a second group of Z*1 multiply-add units to perform the multiply-add calculation and obtaining an intermediate result of Z points in the next line, and then shifting the feature map data of the first line to a left side and making all multiply-add calculations in the same output point implemented in the same multiply-add unit.
Step S220: continuing to input M*1 feature map data of a next line, and performing the same processing as step S210.
Step S230: after a Y-th cycle after the reading operation, continuing to input the M*1 feature map data of the next line, performing the same processing as step S210, and replacing all the feature map data as a whole.

In step S30, the M*1 feature map data of the next line is continually input into the calculation array of the preset number of output channels, and a next group of Z*1 multiply-add units is used in turn to perform the multiply-add calculation so as to obtain Z calculation results, until after a Y*Yth cycle of the reading operation is performed, all multiply-add calculations of Z data in the first line on the first input channel are completed.

In step S40, feature map data of a next input channel of the first input channel is input into the calculation array, and the above steps S10 to S40 are repeated.

In step S50, after a Y*Y* preset number of cycles once the reading operation is performed, all the multiply-add calculations of Z data in the first line are completed, and a calculation result is output.

In step S60, the next M*N feature map data of all the input channels is read, and the steps S10 to S50 are repeated until the feature map data of all the input channels are calculated.

In an application scenario, the steps S10 to S60 may include following steps.

In step S3010, M*1 feature map data of input channel0 is sent to a calculation array of oc_num output channels, a first group of 15*1 multiply-add units are used to perform the multiply-add calculation of the first line so as to obtain an intermediate result of 15 points.

If the weights are 3*3/1*1, the calculation array contains 15*9 multiply-add units. If the weights are 5*5, the calculation array contains 15*25 multiply-add units. If the weights are 7*7, the calculation array contains 15*49 multiply-add units. If the weights are 11*11, the calculation array contains 15*121 multiply-add units.

In step S3020, in the next cycle, feature map data of a next line of the input channel0 is sent to the calculation array of oc_num output channels, and a second group of 15*1 multiply-add units are used to perform the multiply-add calculation of a second line so as to obtain an intermediate result of 15 points in the next line; at the same time, a data register0 0-25 of the first line is shifted to the left, so that all the multiply-add calculations of the same output point are implemented in the same multiply-add unit.

In step S3030, M*1 feature map data of the next line is continually input, and the same processing is performed.

In step S3040, after K cycles behind step S202, the M*1 feature map data of the next line is continually input, and the same processing is performed. Then, all the data registers are replaced as a whole, and a value of data register1 is assigned to data register0, and a value of data register2 is assigned to data register1... to realize the multiplexing of line data.

In step S3050, the M*1 feature map data of the next line is continually input, and the same processing as S3030 is performed.

In step S3060, after K*K cycles behind step S202 (the K*K is consistent with the above Y*Y, that is, K and Y have the same meaning, and the following K and K*K are also similar), all the multiply-add calculations of 15 data in the first line on input channel0 are completed. M*1 feature map data of an input channel1 is sent to the calculation array, and step S3010 to step S3060 are repeated.

In step S3070, after K*K*ic_num (a number of input channels) cycles behind step S202, all the multiply-add calculations of 15 data in the first line have been completed, and are output to a double data rate synchronous dynamic random Memory (DDR SDRAM).

In step S3080, next M*N feature map data of all the input channels is read, step S3010 to step S3070 are repeated, until all the input channels data are processed.

The present disclosure will be described below in conjunction with alternative implementations of the present disclosure.

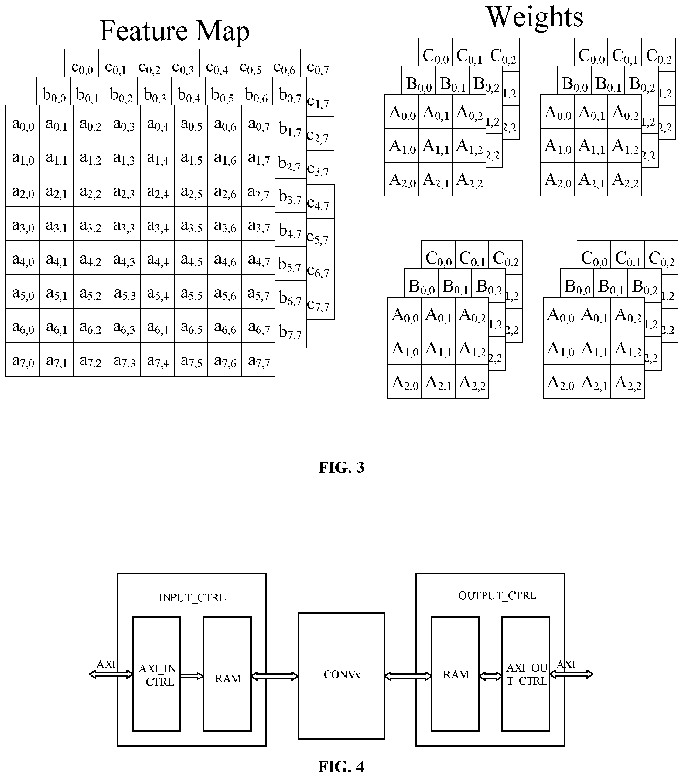

An alternative implementation provides an efficient AI processing method. The processing method analyzes a convolution algorithm. As shown in FIG. 3, feature maps of F input channels are subjected to a convolution (corresponding to weights of F K*K) and accumulation calculation, and a feature map of one output channel is output. When it is necessary to output feature maps of multiple output channels, the result may be obtained by accumulating the feature maps of the same F input channels (corresponding to weights of other F K*K). Then the number of repeated use of feature map data is the number of output channels, so the feature map data may be read only once if possible to reduce bandwidth and power consumption requirements for reading the DDR SDRAM

Since the number of multiplications and additions (that is, computing power) is fixed, the number of output channels that may be calculated in a cycle is determined. When the computing power needs to be increased/decreased, the expansion and reduction of the computing power may be achieved by adjusting the number of output channels to calculate at one time. That is, there are some 0 values in the feature map data and weights, and the multiplication result of these values must be 0, so the multiplication calculation and accumulation calculation this time may be omitted to reduce power consumption. Due to the fixed-point quantization, many values in the feature map are the same. Thus there is no need to perform the multiplication calculation for the same values of the feature map later, and a result of the previous calculation may be used directly.

With this implementation, the data stored in the DDR SDRAM needs to be read only once, which reduces bandwidth consumption; and in the calculation process, all data is multiplexed by shifting, which reduces the power consumption of multiple reads to SRAM

FIG. 4 is a schematic diagram of an AI processing architecture according to an embodiment of the present disclosure. Based on FIG. 4, the efficient AI processing method of this alternative implementation includes following steps.

In step S4010, the M*N feature map data of all the input channels (if the weights are 3*3/1*1, M*N=(15+2)*(9+2); if the weights are 5*5, M*N=(15+4)*(25+4); if the weights are 7*7, M*N=(15+6)*(49+6); if the weights are 11*11, M*N= (15+10)*(121+10)) is read and stored in the internal SRAM. The weights (if the weights are 3*3/1*1, oc_num=16; if the weights are 5*5, oc_num=5; if the weights are 7*7, oc_num=3; if the weights are 11*11, oc_num=1) of oc_num output channels are read and stored in the internal SRAM

In step S4020, the M*1 feature map data of the input channel0 is sent to the calculation array of oc num output channels (if the weights are 3*3/1*1, the calculation array includes 15*9 multiply-add units; if the weights are 5*5, the calculation array includes 15*25 multiply-add units; if the weights are 7*7, the calculation array includes 15*49 multiply-add units; if the weights are 11*11, the calculation array includes 15*121 multiply-add units), the first group of 15*1 multiply-add units are used to perform the multiply-add calculation of the first line so as to obtain an intermediate result of 15 points.

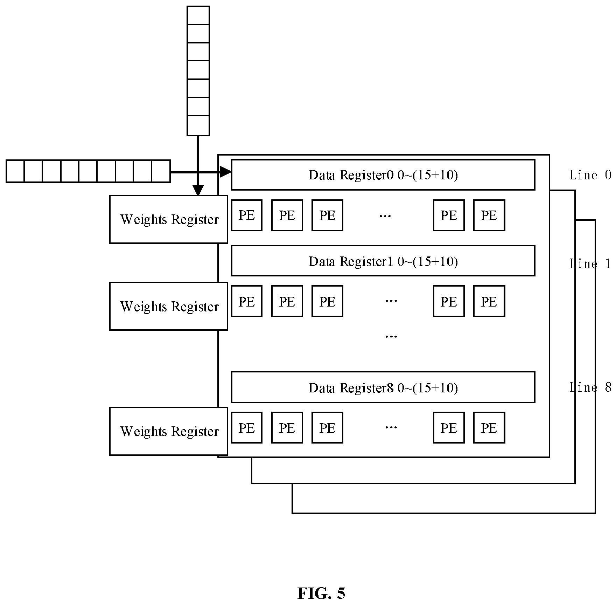

A data flow of step S4020 is shown in FIG. 5.

In step S4030, in the next cycle, the M*1 feature map data of the next line of input channel0 is sent to the calculation array of oc num output channels, and the second group of 15*1 multiply-add units are used to perform the multiply-add calculation of the second line so as to obtain an intermediate result of 15 points in the next line; at the same time, the data register0 0-25 of the first line is shifted to the left so that all the multiplication and addition of the same output point are implemented in the same multiply-add unit.

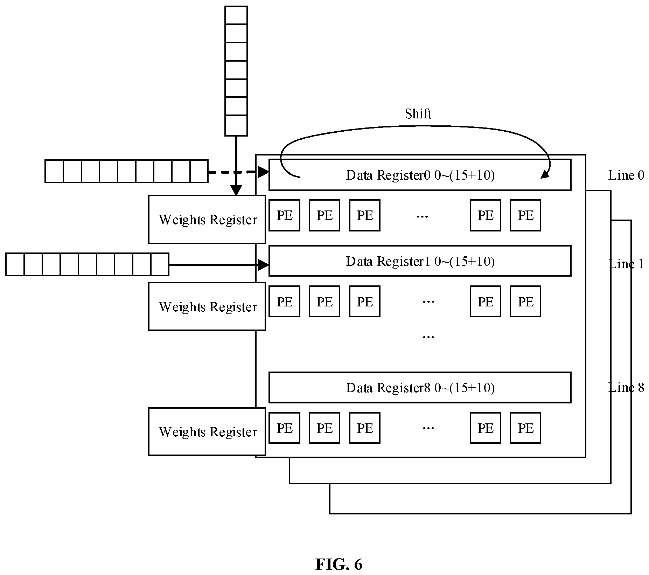

The data flow of step S4030 is shown in FIG. 6.

In step S4040, M*1 feature map data of the next line is continually input, and the same processing is performed.

In step S4050, after K cycles in step S4010, the M*1 feature map data of the next line is continually input, and the same processing is performed. Then, all data registers are replaced as a whole, and the value of data register1 is assigned to data register0, and the value of data register2 is assigned to data register1... to realize the multiplexing of line data.

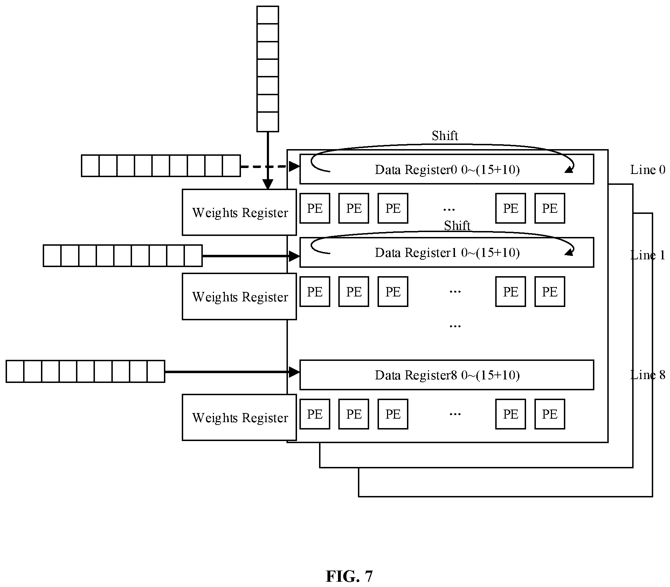

A data flow of step S4050 is shown in FIG. 7.

In step S4060, M*1 feature map data of the next line is continually input, and the same processing as step S4040 is performed.

In step S4070, after K*K cycles in step S4010, all the multiply-add calculations on the input channel 0 of the 15 data in the first line have been completed. The M*1 feature map data of input channel 1 is sent to the calculation array, and step S4020 to step S4060 are repeated.

In step S4080, after K*K*ic_num (the number of input channels) cycles in step S4010, all the multiply-add calculations of 15 data in the first line have been completed, and are output to the

### DDR SDRAM

In step S4090, the next M*N feature map data of all the input channels is read, and steps S4010 to S4060 are repeated until all the input channel data are processed.

If the above steps S4010 to S4090 are divided into three parts and are respectively performed by three modules, the three modules include: INPUT_CTRL, convolution acceleration and OUTPUT_CTRL. The function description and corresponding steps are as follows.

### A. INPUT CTRL

Corresponding to the above step S4010, this module mainly reads the feature map and weights from the DDR SDRAM through an Advanced eXtensible Interface (AXI) bus, and stores them in the SRAM for being read and used in subsequent convolution acceleration. Due to the limited SRAM space, according to different sizes of the weights, a small piece of data corresponding to all the input channel feature maps is read and stored in the SRAM, and all the output channel data of the data in this range is released after the calculation is completed, and next small piece of data in the input channel feature map is used continually.

### B. Convolution acceleration

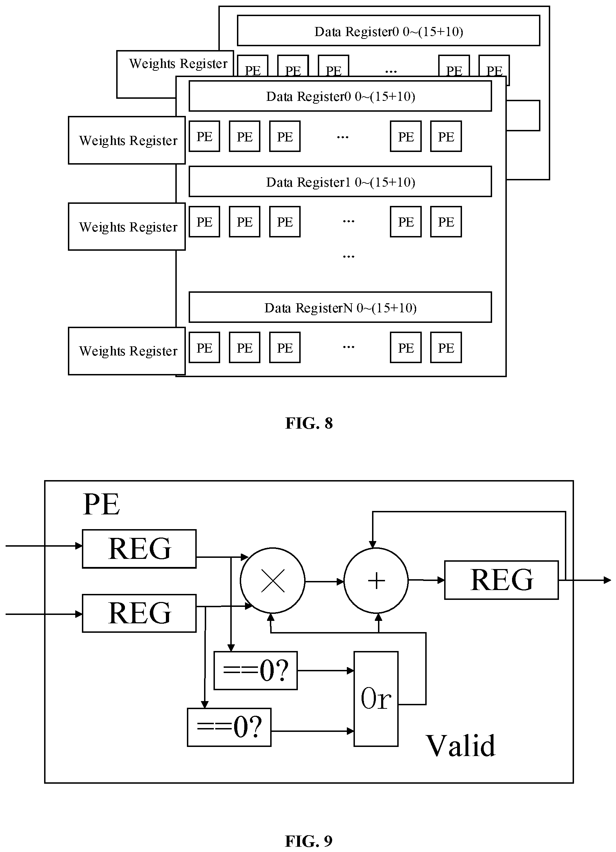

Corresponding to the above steps S4020 to S4070, this module mainly performs hardware acceleration on the CNN convolutional network. As shown in FIG. 8, the data sent by INPUT_CTRL is dispersed into the multiply-add array for the convolution calculation, and then the calculation result is returned to OUTPUT CTRL.

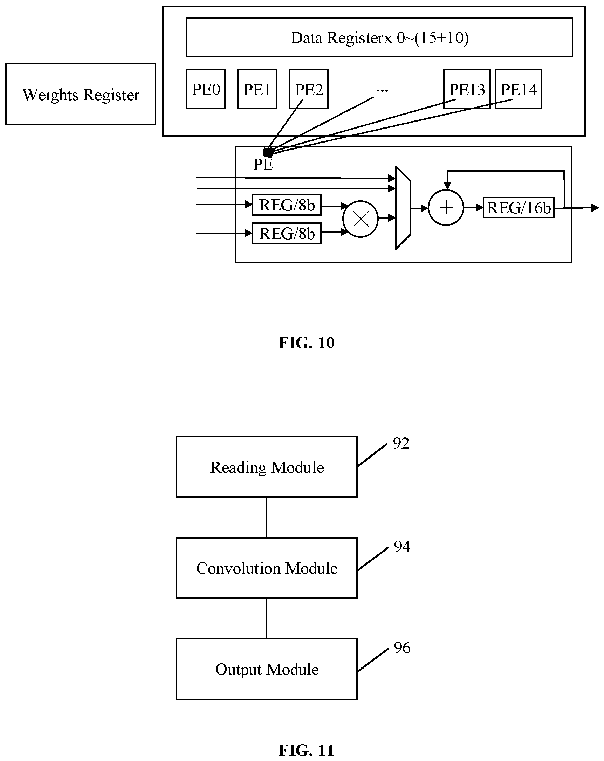

In the calculation process, the following two methods may be used to reduce the power consumption in a computing process:
1) Method 1: as shown in FIG. 9, when the feature map or weights are 0, multiplication and accumulation calculations are not performed.
2) Method 2: as shown in FIG. 10, when a plurality of data values of the feature map are the same, only one data is multiplied, other data is not multiplied, and the result of multiplication of the first data may be directly used.

### C. OUTPUT CTRL

Corresponding to the above steps S4080 and S4090, this module mainly writes out all output channel feature map data after the convolution acceleration through the AXI bus to the DDR SDRAM after arbitration and address management control, so as to be used for the next layer of convolution acceleration.

The high-efficiency AI processing process of this alternative implementation is illustrated by taking 2160 multiply-add resources and a kernel of 3*3 as an example below. The steps of the processing process are as follows.

In step S5010, 17*11 feature map data of all the input channels is read and stored in the internal SRAM; weights of 16 output channels are read and stored in the internal SRAM

In step S5020, 17*1 feature map data of the input channel0 is sent to a calculation array of 16 output channels, a first group of 15*1 multiply-add units are used to perform the multiply-add calculation of the first line to obtain the intermediate result of 15 points.

In step S5030, in the next cycle, the 17*1 feature map data of the next line of the input channel0 is sent to the calculation array of 16 output channels, and a second group of 15*1 multiply-add units are used to perform the multiply-add calculation of the second line so as to obtain the intermediate result of 15 points in the next line; at the same time, the data register0 0-25 of the first line is shifted to the left so that all the multiply-add calculation of the same output point are implemented in the same multiply-add unit.

In step S5040, the 17*1 feature map data of the next line is continually input, and the same processing is performed.

In step S5050, after 3 cycles of step S5010, 17*1 feature map data of the next line is continually input, and the same processing is performed. Then, all the data registers are replaced as a whole, and the value of data register1 is assigned to data register0, and the value of data register2 is assigned to data register1... to realize the multiplexing of line data.

In step S5060, the 17*1 feature map data of the next line of is continually input, and the same processing as step S5040 is performed.

In step S5070, after 9 cycles in step S5010, all the multiply-add calculations of 15 data in the first line on the input channel0 have been completed. The 17*1 feature map data of the input channel1 is sent into the calculation array and S5020-S5060 are repeated.

In step S5080, after 2304 cycles in step S5010 (when the number of input channels is 256), all the multiply-add calculations of 15 data in the first line have been completed, and are output to the DDR SDRAM

In step S5090, the next 17*11 of all the input channels is read, step S5010 to step S5070 are repeated until all input channel data are processed.

Through this alternative implementation, the data stored in the DDR SDRAM only needs to be read once, which reduces bandwidth consumption; and in the calculation process, all the data is multiplexed by shifting, which reduces power consumption caused by multiple reads to the SRAM

Based on the description of the above implementation, it can be known that the method of this embodiment may be implemented through software in addition to indispensable general hardware platform, or through hardware. The technical solutions of the present disclosure may substantively be embodied in a software manner. The computer software product is stored in a storage medium (such as a read-only memory (ROM)/random access memory (RAM), a magnetic disc and an optical disc) and includes a plurality of instructions to enable one terminal device (which may be a mobile phone, a computer, a server, a network device or the like) to implement the method described in the embodiments of the present disclosure.

### Example 2

In this embodiment, a data processing device is further provided, and the device is configured to implement the above embodiment and implementations, and those that have been explained will not be repeated. As presented in the following text, term "module" may implement a combination of software and/hardware with a predetermined function. Although the device described in below embodiments of the present disclosure is implemented through software, it is possible and conceivable that the device may be implemented through hardware or a combination of software and hardware.

FIG. 11 is a structural block diagram of a data processing device according to an embodiment of the present disclosure. As shown in FIG. 11, the device includes: a reading module 92, configured to read M*N feature map data of all input channels and weights of a preset number of output channels, herein a value of M*N and a value of the preset number are respectively determined by a preset Y*Y weights; M, N, and Y are all positive integers; a convolution module 94, coupled to the reading module 92, configured to input the read feature map data and the weights of the output channels into a multiply-add array of the preset number of output channels for a convolution calculation; herein a mode of the convolution calculation includes: in a case that the feature map data or the weights of the output channels are zero, not performing the convolution calculation; and in a case that there are a plurality of feature map data with same values, selecting one from the same values to perform the convolution calculation; an output module 96, coupled to the convolution module 94, configured to output a result of the convolution calculation.

Alternatively, the reading module 92 of the present disclosure may include: a first reading unit, configured to read the M*N feature map data of all the input channels and save them in a memory; and a second reading unit, configured to read the weights of the preset number of output channels and save them in the memory.

Alternatively, the convolution module 94 in the present disclosure is configured to perform the following steps.

Step S1: inputting M*1 feature map data of a first input channel and the weights of the preset number of output channels into a calculation array of the preset number of output channels, using a first group of Z*1 multiply-add units to perform a multiply-add calculation and obtaining Z calculation results, herein Z is determined by the preset Y*Y weights.

Step S2: in the following cycles, inputting the M*1 feature map data of the next line into the calculation array of the preset number of output channels sequentially, until after a Y-th cycle once the reading operation is performed, all the feature map data are replaced as a whole, herein the reading operation is to read the M*N feature map data of all the input channels, and the weights of the preset number of output channels.

Step S3: inputting the M*1 feature map data of the next line into the calculation array of the preset number of output channels continually, using the next group of Z*1 multiply-add units to perform the multiply-add calculation and obtaining Z calculation results, until after a Y*Yth cycle of the reading operation is performed, all the multiply-add calculations of Z data in the first line on the first input channel are completed.

Step S4: inputting feature map data of a next input channel of the first input channel into the calculation array, and repeating the above steps S1 to S4.

Step S5: after Y*Y* preset number of cycles of the reading operation is performed, completing all the multiply-add calculations of Z data in the first line, and outputting the calculation results.

Step S6: reading next M*N feature map data of all the input channels, and repeating the above steps S1 to S5 until the feature map data of all the input channels are calculated.

Step S2 may include the following steps:
Step S21: sending, in the next cycle, M*1 feature map data of the next line of the first input channel to the calculation array of the preset number of output channels, and using a second group of Z*1 multiplying and adding units to perform the multiply-add calculation so as to obtain an intermediate result of the Z points in the next line, and shifting the feature map data of the first line to a left side so as to make all multiply-add calculations in the same output point implemented in the same multiply-add unit.
Step S22: continuing to input M*1 feature map data of a next line, and performing the same processing as step S21.
Step S23: after a Y-th cycle of the reading operation, continuing to input the M*1 feature map data of the next line, and performing the same processing as step S21, and replacing all the feature map data as a whole.

The above multiple modules may be implemented through software or hardware. For hardware, the modules may be implemented in but not limited to the following manner: the above modules are all located in one processor; alternatively, the above modules are located in different processors through random combination of the modules.

### Example 3

In an embodiment of the present disclosure, a storage medium is further provided. The storage medium stores a computer program configured to perform the steps in any one of the above method embodiments.

Alternatively, in this embodiment, the storage medium may be configured to store a computer program for implementing the following steps: reading M*N feature map data of all input channels and weights of a preset number of output channels, herein a value of M*N and a value of the preset number are respectively determined by preset Y*Y weights; inputting read feature map data and the weights of the preset number of output channels into a multiply-add array of the preset number of output channels for a convolution calculation; herein a mode of the convolution calculation includes: in a case that the feature map data or the weights of the output channels are zero, not performing the convolution calculation; and in a case that there are a plurality of feature map data with the same values, selecting one from the same values to perform the convolution calculation.

Alternatively, in this embodiment, the storage medium may include but not limited to multiple medium capable of storing computer programs, such as a universal serial bus flash disk, an ROM, an RAM, a mobile hard disc, a magnetic disc or an optical disc.

This embodiment further provides an electronic device including a memory and a processor. The memory stores a computer program, and the processor is configured to run the computer program to perform the steps in any one of the above method embodiments.

Alternatively, the electronic device may further include a transmission device and an I/O device. Herein, the transmission device is connected to the processor, and the I/O device is connected to the processor.

Alternatively, in this embodiment, the processor may be configured to perform the following steps through a computer program: reading M*N feature map data of all input channels and weights of a preset number of output channels, herein a value of M*N and a value of the preset number are respectively determined by preset Y*Y weights; inputting the read feature map data and the weights of the preset number of output channels into a multiply-add array of the preset number of output channels for a convolution calculation; herein a mode of the convolution calculation includes: in a case that the feature map data or the weights of the output channels are zero, not performing the convolution calculation; and in a case that there are a plurality of feature map data with the same values, selecting one from the same values to perform the convolution calculation; outputting a result of the convolution calculation.

Alternatively, for examples in this embodiment, examples described in the above embodiments and alternative implementations may be referred to and are not repeated here.

The multiple modules or steps of the present disclosure can be implemented by a general computing device. The multiple modules may be in a single computing device or may be distributed in a network composed of multiple computing devices. Alternatively, the modules can be implemented with program codes executable by a computing device, so that they can be stored in a storage device for execution by the computing device. In some cases, the steps shown or described can be implemented in a different order than herein, or may be respectively made into multiple integrated circuit modules, or multiple modules or steps of them may be made into a single integrated circuit module. In this way, the present disclosure is not limited to any particular combination of hardware and software.

## Claims

1. A data processing method, comprising steps of:
reading M*N feature map data of all input channels and weights of a preset number of output channels, wherein a value of M*N and a value of the preset number are respectively determined by preset Y*Y weights, and M, N and Y are all positive integers;
inputting read feature map data and the weights of the preset number of output channels into a multiply-add array of the preset number of output channels for a convolution calculation;
wherein a mode of the convolution calculation comprises:
not performing the convolution calculation in a case that the feature map data or the weights of the output channels are zero, and
selecting one from a plurality of same values to perform the convolution calculation
in a case that there are a plurality of feature map data with the same values;
outputting a result of the convolution calculation.

2. The method according to claim 1, wherein reading M*N feature map data of all the input channels and weights of the preset number of output channels comprises:
reading the M*N feature map data of all the input channels and saving them in a memory;
reading the weights of the preset number of output channels and saving them in the memory.

3. The method according to claim 1, wherein inputting read feature map data and the weights of the preset number of output channels into the multiply-add array of the preset number of output channels for a convolution calculation comprises:
inputting, in a first cycle, M*1 feature map data of a first line of a first input channel and the weights of the preset number of output channels into a calculation array of the preset number of output channels, and using a first group of Z*1 multiply-add units to perform a multiply-add calculation and then obtaining Z calculation results, wherein Z is determined by the preset Y*Y weights;
inputting, in a second cycle, M*1 feature map data of a second line and the weights of the preset number of output channels into the calculation array of the preset number of output channels, and using a second group of Z*1 multiply-add units to perform the multiply-add calculation and then obtaining Z calculation results, until after a multiply-add calculation of a Y-th cycle is completed once a reading operation is performed, M*N feature map data of the first input channel is replaced as a whole, wherein the reading operation is an operation of reading the M*N feature map data of all the input channels and the weights of the preset number of output channels;
inputting, in a Y+2 cycle, M*1 feature map data of a Y+2 line and the weights of the preset number of output channels into the calculation array of the preset number of output channels, and using a Y+2 group of Z*1 multiply-add units to perform the multiply-add calculation and then obtaining Z calculation results, until after a Y*Yth cycle of the reading operation is performed, all multiply-add calculations of Z data in the first line of the first input channel are completed;
inputting the M*N feature map data of the preset number of input channels into the calculation array sequentially, and for the feature map data of each of the input channels, performing the multiply-add calculation for the M*1 feature map data of each line sequentially, until after Y*Y* preset number of cycles once the reading operation is performed, all the multiply-add calculations of Z data in the first line are completed, and outputting a calculation result;
reading the M*N feature map data of all the input channels sequentially, and repeating a same operation as completing all the multiply-add calculation of Z data in the first line, until the feature map data of all the input channels are calculated.

4. The method according to claim 3, wherein inputting, in the second cycle, the M*1 feature map data of a second line and the weights of the preset number of output channels into the calculation array of the preset number of output channels, and using the second group of Z*1 multiply-add units to perform the multiply-add calculation and then obtaining Z calculation results, until after the multiply-add calculation of the Y-th cycle is completed once the reading operation is performed, the M*N feature map data of the first input channel is replaced as a whole, comprising:
inputting, in the second cycle, the M*1 feature map data of the second line of the first input channel and the weights of the preset number of output channels into the calculation array of the preset number of output channels, using the second group of Z*1 multiply-add units to perform the multiply-add calculation and then obtaining an intermediate result of Z points of a next line, shifting the feature map data of the first line to a left side and making all multiply-add calculations in a same output point are implemented in a same multiply-add unit;
inputting, in a third cycle, M*1 feature map data of a third line, and performing the same operation as a previous last cycle;
until after the multiply-add calculation of the Y-th cycle is completed once the reading operation is performed, in a Y+1th cycle, inputting M*1 feature map data of a Y+1th line, performing the same operation as the previous last cycle and replacing the M*N feature map data of the first input channel as a whole.

5. A data processing device, comprising:
a reading module, configured to read M*N feature map data of all input channels and weights of a preset number of output channels, wherein a value of M*N and a value of the preset number are respectively determined by preset Y*Y weights, and M, N and Y are all positive integers;
a convolution module, configured to input read feature map data and the weights of the preset number of output channels into a multiply-add array of the preset number of output channels for a convolution calculation; wherein a mode of the convolution calculation comprises:
not performing the convolution calculation in a case that the feature map data or the weights of the output channels are zero, and
selecting one from a plurality of same values to perform the convolution calculation
in a case that there are a plurality of feature map data with the same values; and an output module, configured to output a result of the convolution calculation.

6. The device according to claim 5, wherein the reading module comprises:
a first reading unit, configured to read the M*N feature map data of all the input channels and save them in a memory;
a second reading unit, configured to read the weights of the preset number of output channels and save them in the memory.

7. The device according to claim 5, wherein the convolution module is configured to:
input, in a first cycle, M*1 feature map data of a first line of a first input channel and the weights of the preset number of output channels into a calculation array of the preset number of output channels, and use a first group of Z*1 multiply-add units to perform a multiply-add calculation and then obtain Z calculation results, wherein Z is determined by the preset Y*Y weights;
input, in a second cycle, M*1 feature map data of a second line and the weights of the preset number of output channels into the calculation array of the preset number of output channels, and use a second group of Z*1 multiply-add units to perform the multiply-add calculation and then obtain Z calculation results, until after a multiply-add calculation of a Y-th cycle is completed once a reading operation is performed, M*N feature map data of the first input channel is replaced as a whole, wherein the reading operation is an operation of reading the M*N feature map data of all the input channels and the weights of the preset number of output channels;
input, in a Y+2 cycle, M*1 feature map data of a Y+2 line and the weights of the preset number of output channels into the calculation array of the preset number of output channels, and use a Y+2 group of Z*1 multiply-add units to perform the multiply-add calculation and then obtain Z calculation results, until after a Y*Yth cycle of the reading operation is performed, all multiply-add calculations of Z data in the first line of the first input channel are completed;
input the M*N feature map data of the preset number of input channels into the calculation array sequentially, and for the feature map data of each of the input channels, perform the multiply-add calculation for the M*1 feature map data of each line sequentially; until after Y*Y* preset number of cycles once the reading operation is performed, all the multiply-add calculations of Z data in the first line are completed, and output a calculation result;
read the M*N feature map data of all the input channels sequentially, and repeat a same operation as completing all the multiply-add calculations of Z data in the first line, until the feature map data of all the input channels are calculated.

8. The device according to claim 7, wherein the convolution module is configured to input, in the second cycle, the M*1 feature map data of the second line and the weights of the preset number of output channels into the calculation array of the preset number of output channels, and use the second group of Z*1 multiply-add units to perform the multiply-add calculation and then obtain Z calculation results, until after the multiply-add calculation of the Y-th cycle is completed once the reading operation is performed, the M*N feature map data of the first input channel is replaced as a whole, comprises:
input, in the second cycle, the M*1 feature map data of the second line of the first input channel and the weights of the preset number of output channels into the calculation array of the preset number of output channels, use the second group of Z*1 multiply-add units to perform the multiply-add calculation and then obtain an intermediate result of Z points of a next line, shift the feature map data of the first line to a left side and make all multiply-add calculations in a same output point are implemented in a same multiply-add unit;
input, in a third cycle, M*1 feature map data of a third line, and perform the same operation as a previous last cycle;
until after the multiply-add calculation of the Y-th cycle is completed once the reading operation is performed, in a Y+1th cycle, input M*1 feature map data of a Y+1th line, perform the same operation as the previous last cycle and replace the M*N feature map data of the first input channel as a whole.

9. A storage medium, storing a computer program configured to perform the data processing method according to any one of claims 1 to 4 when the computer program is running.

10. An electronic device, comprising a memory and a processor, wherein the memory stores a computer program, and the processor is configured to run the computer program to perform the data processing method according to any one of claims 1 to 4.
